# DEMANDE DE BREVET EUROPEEN

(11) **EP 4 380 100 A1**
(43) Date de publication de la demande: **05.06.2024**
(21) Numéro de dépôt: 23213645.7
(22) Date de dépôt: 01.12.2023
(51) Int. Cl.: H04L 9/08, H04L 9/32, H04L 9/40, H04L 45/00, H04L 67/12, H04W 12/00, H04W 12/041, H04W 12/069

(54) **SYSTÈME INTÉGRANT UNE DÉLÉGATION DE GESTION DE CLÉS PUBLIQUES EN MODE DÉGRADÉ FONDÉ SUR UN MÉCANISME DE CONFIANCE**

(30) Priorité: 02.12.2022 FR 2212691
(71) Demandeur: THALES, 92190 Meudon (FR)
(72) Inventeur: BLAISE, Agathe, 92622 Gennevilliers Cedex (FR); MONTENOT, Jean-Marc, 92622 Gennevilliers Cedex (FR); SCHOLLER, Franck, 92622 Gennevilliers Cedex (FR)
(74) Mandataire: Lavoix

(57) **Abrégé**

Ce système informatique de périphérie à accès multiple (10) comporte : une infrastructure de gestion de clés (20) ayant une instance centrale sur un réseau coeur (12) et une instance locale sur un réseau périphérique (16) ; un utilisateurs/administrateur (U3) sur le réseau périphérique , mémorisant une paire de clés (K_U3, k_U3) et un certificat (Certif_U3) signé par l'instance centrale, et ayant le privilège d'être promu administrateur en cas de fonctionnement en mode dégradé du réseau périphérique ; un serveur (S2) du réseau périphérique mémorisant une clé publique (K_ACL2) de l'instance locale, l'utilisateur/administrateur pouvant enrôler un utilisateur temporaire (U4) en générant une paire de clés éphémères (EK_U4, Ek_U4), en demandant une certification de la paire de clés éphémères par l'instance locale et en transmettant la paire de clés éphémères et le certificat éphémère (ECertif_U4) généré à l'utilisateur temporaire pour lui permettre d'accéder à un service du serveur.

## Description

La présente invention concerne conjointement le domaine des systèmes informatiques de périphérie à accès multiple - MEC (de l'anglais «Multi-access Edge Computing ») et le domaine de la cryptographie (plus particulièrement des infrastructures de gestion de clés) .

Un système MEC permet de déplacer les services depuis un réseau central vers une pluralité de réseaux de périphérie, qui sont situés en bordure du réseau central au plus proche des équipements des utilisateurs. Au lieu de faire remonter toutes les données depuis un utilisateur vers le réseau central, c'est le réseau de périphérie, placé en coupure entre cet utilisateur et le réseau central, qui analyse, traite et/ou stocke tout ou partie des données. La collecte et le traitement des données à proximité de l'équipement de l'utilisateur diminue la latence et permet de disposer d'une bande passante plus élevée, ce qui bénéficie aux applications exécutées sur l'équipement de l'utilisateur.

Un système MEC comporte par conséquent des serveurs de bordure (« edge computing ») disposés dans les réseaux de périphérie, « en bordure » du réseau central. Ces serveurs hébergent des ressources accessibles à des utilisateurs appartenant à diverses organisations et détenant différents types de droits.

La liaison de communication entre un réseau de périphérie et le réseau central peut être de toute nature. En particulier, pour un réseau de périphérie mobile (i.e. embarqué à bord d'un véhicule), la liaison peut comporter une composante air (GSM, satellite, ...)

Traditionnellement, la gestion des droits des utilisateurs est prise en charge par une Infrastructure de Gestion de Clés - IGC.

Dans un système MEC, l'IGC est composée de plusieurs instances : une instance centrale de l'IGC, localisée par exemple sur un serveur de gestion des droits du réseau central, et plusieurs instances locales de l'IGC, chacune localisée sur un serveur de gestion des droits d'un réseau de bordure.

En considérant l'instance centrale et les instances locales de l'IGC, il existe plusieurs autorités de certification - AC, dont une autorité de certification dite centrale, localisée sur le serveur de gestion des droits du réseau central, et d'autres autorités de certification dites locales, localisées sur les serveurs de gestion des droits des réseaux de bordure.

L'IGC gère plusieurs tâches principales, dont un service de certification des clés publiques des utilisateurs, un service délivrance des certificats auprès des utilisateurs et des serveurs concernés, ainsi qu'un service de validation/révocation des certificats.

Ainsi, un serveur de bordure souhaitant authentifier un utilisateur (ou plus précisément l'équipement utilisé par cet utilisateur) communique avec l'AC centrale afin de vérifier la valider du certificat fourni par l'utilisateur souhaitant accéder aux ressources offertes par ce serveur de bordure.

Toutefois, il peut arriver que le serveur de bordure soit temporairement déconnecté de l'AC centrale, notamment lors de la perte de la communication entre le réseau de périphérie et le réseau central, au cours du déplacement du réseau de périphérie par exemple. On dit que le réseau de périphérie fonctionne alors en mode dégradé, alors qu'il fonctionnait avant la rupture de la communication en mode nominal ou connecté.

En créant une hiérarchie d'AC, c'est-à-dire une AC locale dans chaque réseau de périphérie à l'AC centrale, un fonctionnement en mode dégradé est envisageable. Ainsi, si un serveur de bordure ne peut plus interroger l'AC centrale, il interrogera l'AC locale du réseau de périphérie auquel il appartient.

Mais un problème se pose alors pour un nouvel utilisateur souhaitant accéder aux ressources d'un serveur de bordure alors qu'il n'est pas connu de l'IGC et que le réseau de périphérie hébergeant ce serveur de bordure fonctionne en mode dégradé. Le nouvel utilisateur ne disposant pas d'un certificat délivré par l'AC centrale ou l'AC locale préalablement à la coupure de la communication, ne peut donc pas accéder au serveur de bordure.

L'article B. Aslam et al., "Distributed certificate and application architecture for VANETs", IEEE Military Communications Conférence (MILCOM), 2009, traite le cas des réseaux ad-hoc véhiculaires (dit réseaux VANETs) où se pose la question de la vérification de la validité des certificats lorsque l'utilisateur est mobile et change de région administrative, c'est-à-dire de réseau de périphérie. Cet article propose un système qui permet à un réseau périphérique B de valider le certificat d'un utilisateur dont le certificat a été généré dans un réseau périphérique A, lorsque cet utilisateur s'est déplacé du réseau périphérique A vers le réseau périphérique B. Pour cela, le réseau périphérique B doit contacter le réseau périphérique A pour vérifier que le certificat de l'utilisateur dans le réseau périphérique A est bien valide. Cependant, le système proposé comporte deux limitations principales : le système doit être propriétaire pour pouvoir implémenter ces fonctions de remontée d'informations entre différentes autorités de certifications - AC locales ; de plus, ce système ne fonctionne qu'en mode connecté et ne fonctionne pas lorsque le réseau périphérique B ne peut plus contacter le réseau périphérique A.

Hors du domaine des systèmes informatiques de périphérie à accès multiple - MEC, on connait le document US 10 063 382 B1 qui divulgue un système comportant une pluralité d'autorités de certification - CA et un dispositif propre à sélectionner une AC principale et, lorsque celle-ci n'est plus accessible, une AC secondaire. Cependant ces AC principale et secondaire sont indépendantes l'une de l'autre.

Le but de la présente invention est de résoudre ces problèmes de mobilité des utilisateurs pour autoriser un fonctionnement en mode dégradé d'un réseau de périphérie.

Pour cela, l'invention a pour objet un système informatique de périphérie et un procédé d'enrôlement d'un utilisateur temporaire selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
La figure 1 est une représentation schématique d'un mode de réalisation d'un système MEC selon l'invention ;
Les figures 2 et 3 sont des représentations sous forme de chronogrammes d'un mode de réalisation d'un procédé de fonctionnement du système MEC de la figure 1 en mode connecté ; et,
Les figures 4 à 5 sont des représentations sous forme de chronogrammes d'un mode de réalisation d'un procédé de fonctionnement du système MEC de la figure 1 en mode dégradé.

Le procédé selon l'invention autorise la gestion des accès d'utilisateurs appartenant à diverses organisations à des ressources situées sur un serveur de bordure, en prenant en compte la possibilité que le réseau de périphérie hébergeant ce serveur de bordure fonctionne en mode dégradé, c'est-à-dire soit déconnecté de l'instance centrale de l'IGC.

En particulier, le procédé selon l'invention permet de répondre au cas de nouveaux utilisateurs souhaitant accéder à des ressources situées sur le serveur de bordure alors que le réseau de périphérie hébergeant ce serveur de bordure est en mode dégradé et que ces nouveaux utilisateurs n'ont pas préalablement été enregistrés auprès de l'AC centrale ou de l'AC locale du réseau de périphérie considéré et ne disposent par conséquent pas d'un certificat signé par cette AC centrale ou cette AC locale.

Le procédé selon l'invention autorise la mobilité entre réseaux de périphérie, c'est-à-dire la capacité pour un nouvel utilisateur, dénommé utilisateur temporaire dans ce qui suit, à accéder à d'autres réseaux de périphérie du système MEC que celui auquel il vient d'être autorisé à accéder.

De manière générale, le procédé selon l'invention permet de déléguer, en mode dégradé, la gestion de clés publiques en se fondant sur un mécanisme de confiance mis en oeuvre par un ou plusieurs utilisateurs/administrateurs du réseau de périphérie.

Cette solution permet à un utilisateur/administrateur de générer de nouvelles clés temporaires, dites éphémères, pour un utilisateur temporaire. Ces clés éphémères sont des clés enfants dérivées des clés parents de l'utilisateur/administrateur. L'utilisateur/administrateur émet ensuite une requête de certification vers l'AC locale. L'AC locale génère et signe un certificat pour cet utilisateur temporaire.

Avantageusement, avec l'utilisation de clés éphémères non-renforcées, il est possible de relier une clé publique enfant à la clé publique parent dont elle est issue, et ainsi retrouver l'utilisateur/administrateur l'ayant générée. Ceci permet une traçabilité.

De plus, comme les certificats parent et enfant sont distincts, il est possible de révoquer le certificat enfant sans interférer sur le certificat parent.

### ARCHITECTURE

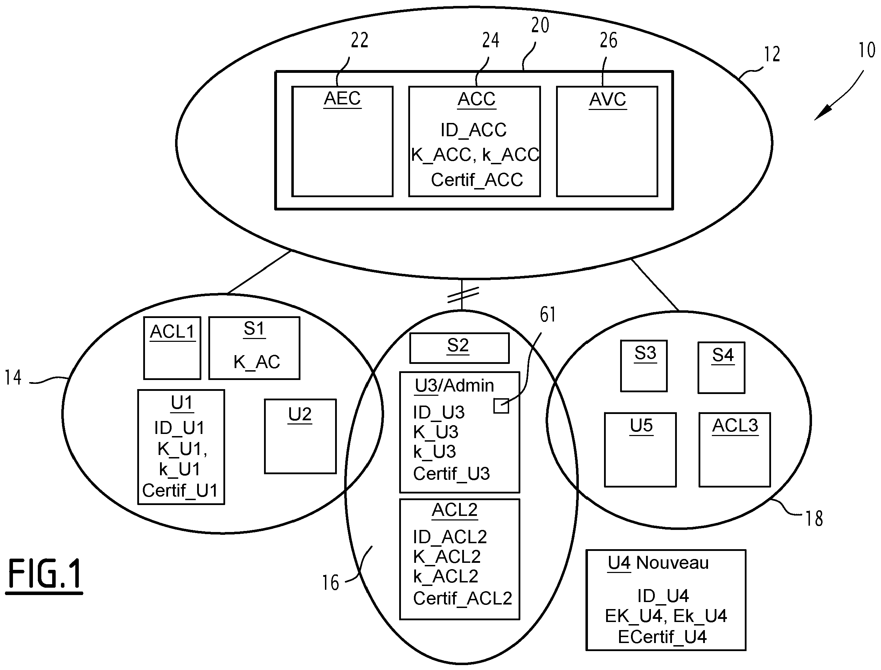

En se référant à la figure 1, le système 10 est un système MEC. Il comporte un réseau coeur 12 et une pluralité de réseaux de périphérie, par exemple trois réseaux de périphérie, 14, 16 et 18.

Le système 10 est muni d'une IGC, qui est l'infrastructure de gestion de clés qui permet de délivrer des certificats aux utilisateurs souhaitant accéder aux ressources du système 10, notamment les ressources des divers réseaux de périphérie.

Le réseau coeur 12 comporte une instance centrale 20 de l'IGC, qui comporte :
- une autorité d'enregistrement centrale - AEC 22, qui vérifie si un utilisateur est identifié comme un utilisateur légitime du système ;
- une autorité de certification centrale - ACC 24, qui génère et maintient à jour les certificats pour les utilisateurs légitimes ; et,
- une autorité de validation centrale - AVC 26, qui offre un service de vérification de la validité d'un certificat sur demande d'un serveur.

En particulier, l'ACC 24 mémorise un identifiant de l'ACC, ID_ACC, une paire de clés de l'ACC (composée d'une clé publique K_ACC et d'une clé privée k_ACC), ainsi qu'un certificat de l'ACC, Certif_ACC.

Chaque réseau de périphérie comporte une instance locale de l'IGC qui lui est propre. L'instance locale de l'IGC prend en charge la gestion des clés en mode dégradé, c'est-à-dire quand la communication avec l'instance centrale 20 de l'IGC est perdue, notamment lorsque la communication entre le réseau de périphérie et le réseau coeur est perdue.

Une instance locale de l'IGC comporte :
- une autorité d'enregistrement locale, qui vérifie si un utilisateur est identifié comme un utilisateur légitime du système ;
- une autorité de certification locale, ACL, qui génère et maintient à jour les certificats pour les utilisateurs légitimes; et,
- une autorité de validation locale, qui offre un service de vérification de la validité d'un certificat sur demande d'un serveur.

Selon l'invention, l'instance locale de l'IGC est légère et ne comporte essentiellement que l'ACL. Le rôle d'autorité d'enregistrement locale revient à vérifier les informations sur l'identité de l'utilisateur. Le rôle d'autorité de validation locale revient à gérer l'enregistrement et la vérification des certificats dans un annuaire LDAP. L'utilisateur qui est promu administrateur du réseau de périphérie en mode déconnecté a les permissions / droits requis pour réaliser les fonctions d'autorité d'enregistrement locale et d'autorité de validation locale.

En conséquence, dans ce qui suit, « instance locale de l'IGC » est « autorité de certification locale » sont essentiellement synonymes.

Ainsi, le réseau de périphérie 14 comporte une ACL1, le réseau de périphérie 16 comporte une ACL2 et le réseau de périphérie 18 comporte une ACL3.

Une autorité de certification locale, comme l'ACL2, mémorise un identifiant de l'ACL, ID_ACL2, une paire de clés de l'ACL (composée d'une clé publique K_ACL2 et d'une clé privée k_ACL2), ainsi qu'un certificat de l'ACL, Certif_ACL2.

Il faut noter qu'une autorité de certification locale est signée par l'autorité de certification centrale, de sorte que la chaine de confiance dans la hiérarchie des autorités de certification soit garantie.

Chaque réseau de périphérie comporte également un ou plusieurs serveurs de bordure, propres à fournir des services prédéfinis à des utilisateurs. Par exemple, le réseau 14 comporte le serveur S1, le réseau 16 comporte un serveur S2 et le réseau 18 comporte un serveur S3 et un serveur S4.

A chaque instant du mode connecté, aucun, un ou plusieurs utilisateur(s) sont connecté(s) à un réseau de bordure.

Par exemple, sur la figure 1, un utilisateur U1 et un utilisateur U2 sont connectés au réseau de périphérie 14, un utilisateur U3 au réseau de périphérie 16 et un utilisateur U5 au réseau de périphérie 18.

Pour le moment, l'utilisateur U4 n'est connecté à aucun des réseaux de périphérie.

Sur l'exemple de l'utilisateur U1, l'équipement de l'utilisateur 1 mémorise les informations :
- l'identifiant de l'utilisateur ID_U1, comme par exemple son nom et le code TAC (« Type Allocation Code » ou « code d'allocation type ») de l'équipement que l'utilisateur utilise pour accéder aux ressources ;
- une paire de clés composée d'une clé publique K_U1 et d'une clé privée k_U1 ; et
- un certificat Certif_U1.

Le certificat électronique Certif_U1 est délivré par l'ACC 24 alors que le réseau de périphérie 14 fonctionne en mode connecté. Ce certificat comporte un ensemble de données contenant :
- l'identifiant de l'utilisateur ID_U1 ;
- la clé publique K_U1 de l'utilisateur U1;
- l'identifiant ID_ACC de l'ACC 24 ayant octroyé le certificat ; et,
- la signature apposée par l'ACC en utilisant sa clé privée, k_ACC.

L'ACC 24, émettrice du certificat Certif_U1, peut elle-même faire partie d'une chaine de confiance (« chain of trust »), c'est-à-dire d'une hiérarchie d'autorités de certification.

L'ACC 24 émettrice est alors certifiée par une autorité de certification supérieure, par exemple une autorité de certification intermédiaire, qui elle-même est certifiée par une autorité de certification racine de la hiérarchie (dans un exemple de hiérarchie de certification à trois niveaux).

L'ACC 24 émettrice possède donc un certificat Certif_ACC délivré par l'autorité de certification supérieure dans la chaine de confiance dont elle fait partie.

On considère qu'un réseau de périphérie, comme le réseau 16, qui fonctionnait en mode connecté, bascule en mode dégradé à partir de la perte de la connexion avec le réseau coeur 12.

L'utilisateur U3 est un utilisateur historique, possédant un certificat délivré par l'instance central de l'IGC avant le basculement dans le mode dégradé.

L'utilisateur U4 est un nouvel utilisateur qui se connecte au réseau de périphérie 16 alors que ce dernier a déjà basculé en mode dégradé. U4 ne possède aucun certificat émis par l'IGC du système 10.

L'instance locale de l'IGC permet d'assurer la continuité du service en mode déconnecté, c'est-à-dire lorsque le réseau de périphérie qu'il équipe n'est plus connecté au réseau coeur 12.

### PROCEDE

### Fonctionnement en mode connecté

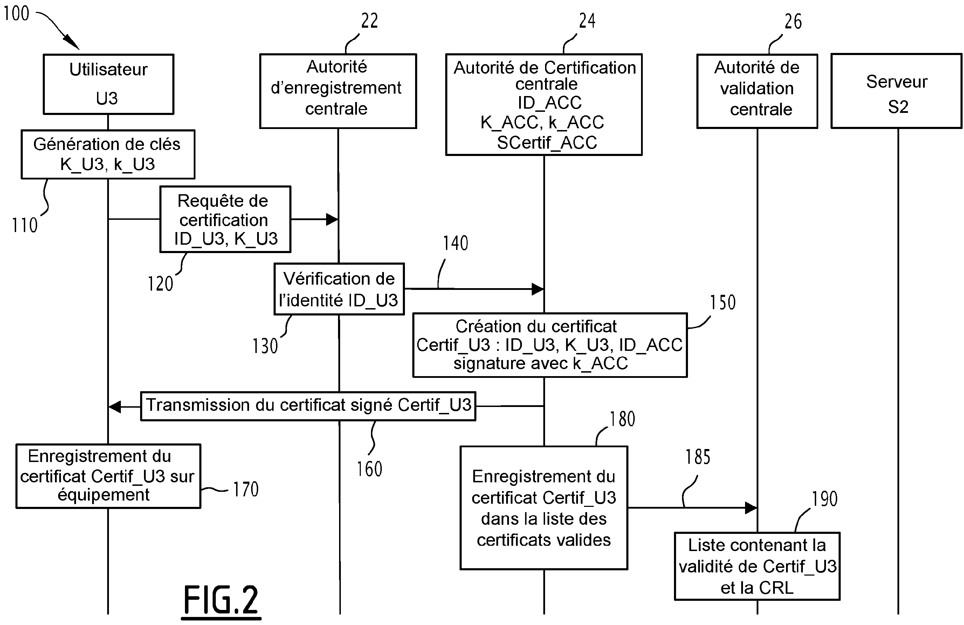

La Figure 2 illustre les étapes d'un procédé 100 de certification d'un nouvel utilisateur par l'instance centrale de l'IGC, comme par exemple l'utilisateur U3, lorsque le réseau de périphérie intermédiaire auquel cet utilisateur est connecté, comme le réseau de périphérie 16, fonctionne en mode connecté.

L'utilisateur possède un identifiant ID_U3.

L'étape 110 correspond à l'attribution d'une paire de clés, une clé publique K U3 et une clé privée k_U3 à l'utilisateur U3. La manière de générer cette paire de clés par l'utilisateur ou une autre entité qui la fournit ensuite à l'utilisateur n'est pas précisée. Elle est conforme à l'état de la technique.

Typiquement, c'est l'utilisateur lui-même qui génère localement sa paire de clés publique / privée. Pour cela, il existe plusieurs moyens, dont l'utilisation de l'algorithme « OpenSSL », qui est très répandu pour générer des clés RSA ou DSA, typiquement sur 2048 bits. Contrairement à la génération de clés éphémères introduite par la suite, les chaines de caractères des clés générées sont ici entièrement aléatoires et ne sont pas liées entre elles d'une manière ou d'une autre.

Dans l'étape 120, l'utilisateur U3 émet une requête de certification vers l'instance centrale 20 de l'IGC, plus précisément vers l'AEC 22. Cette requête comporte l'identifiant de l'utilisateur, ID_U3, et la clé publique K_U3 de l'utilisateur.

Dans l'étape 130, l'AEC 22 vérifie l'identité de l'utilisateur sur la base de l'identifiant ID_U3 présent dans la requête, en consultant une base de données tenue à jour des utilisateurs légitimes du système 10.

Si la vérification de l'identité de l'utilisateur échoue, le requête de certification est rejetée.

Dans l'étape 140, suite à une vérification positive de l'identité de l'utilisateur, l'AEC 22 transmet la requête de certification à l'ACC 24.

Dans l'étape 150, l'ACC 24 crée un certificat pour le nouvel utilisateur. Le certificat intègre l'identifiant de l'utilisateur ID_U3, la clé publique K _U3 de l'utilisateur, l'identifiant ID_ACC de l'ACC 24 qui émet le certificat. Cet ensemble d'informations est ensuite signé pour obtenir un certificat Certif_U3. La signature est calculée en utilisant la clé privée k_ACC de l'ACC 24.

Dans l'étape 160, l'ACC 24 répond à la requête de certification de l'utilisateur en lui transmettant le certificat Certif_U3 crée.

Dans l'étape 170, le certificat Certif_U3 reçu est enregistré sur l'équipement utilisé par l'utilisateur.

Parallèlement, dans l'étape 180, l'ACC 24 enregistre le certificat Certif_U3 dans une première liste des certificats valides. Cette liste comporte notamment, pour chaque certificat, une date de validité de ce certificat. L'ACC 24 tient également à jour une seconde liste des certificats révoqués, ou liste CRL (selon l'anglais « Certificate Revocation List »).

Concrètement, la liste des certificats valides et celle des certificats révoquées peuvent être publiées par un annuaire électronique du type « Protocole d'accès à un annuaire léger » - LDAP (« Lightweight Directory Access Protocol »). Un tel annuaire associe la liste des utilisateurs et leurs certificats avec des permissions ou droits (par exemple l'autorisation d'être promu utilisateur/administrateur) et stocke avantageusement les données de la liste de validation/révocation des certificats.

L'ACC 24 transmet (étape 185) régulièrement ces deux listes à l'AVC 26.

Dans l'étape 190, l'AVC 26 enregistre les deux listes mises àjour reçues de l'ACC 24.

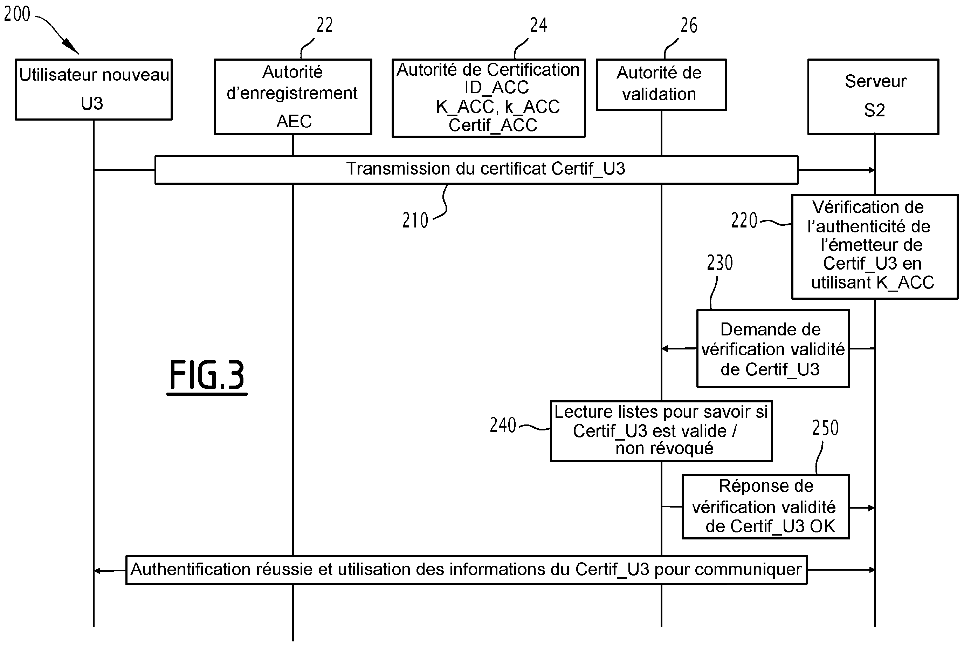

La Figure 3 illustre les étapes d'un procédé 200 d'authentification auprès d'un serveur, comme le serveur S2, d'un utilisateur disposant d'un certificat, comme par exemple l'utilisateur U3, alors que le réseau de périphérie à travers lequel cet utilisateur accède au serveur, fonctionne en mode connecté.

Le procédé 200 est mis en oeuvre lorsque l'utilisateur U3 cherche à accéder à un service offert par le serveur S2.

Selon ce procédé, dans l'étape 210, l'utilisateur transmet le certificat Certif_U3 au serveur S2.

Dans l'étape 220, le serveur vérifie d'abord l'authenticité de l'émetteur du certificat Certif_U3, c'est-à-dire de l'ACC 24, en utilisant la clé publique K_ACC de l'ACC 24 pour déchiffrer le certificat Certif_U3. Le serveur S2 se procure régulièrement les clés publiques des différentes autorités de certification.

Si la vérification de l'authenticité de l'émetteur échoue, le serveur rejette la demande de connexion de l'utilisateur.

Dans l'étape 230, en cas de vérification positive de l'authenticité de l'émetteur du certificat, le serveur S2 vérifie ensuite la validité de ce certificat Certif_U3. Pour ce faire, le serveur S2 adresse à l'AVC 26 une demande de vérification de la validité du certificat Certif_U3.

Dans l'étape 240, l'AVC 26 consulte la seconde liste des certificats révoqués pour vérifier que le certificat Certif_U3 n'est pas révoqué, puis la première liste des certificats valides pour vérifier si le certificat Certif_U3 est encore valide.

Dans l'étape 250, l'AVC 26 répond à la demande du serveur S2 en indiquant si oui ou non le certificat Certif_U3 est valide.

Dans la négative, le serveur rejette la demande de connexion de l'utilisateur.

Dans l'affirmative, le serveur S2 considère l'authentification réussie et utilise les informations du certificat Certif_U3 pour communiquer avec l'utilisateur U3, notamment en chiffrant les communications en utilisant la clé publique K_U3 de l'utilisateur. Le serveur S2 indique à l'utilisateur sa clé publique de manière à permettre à l'utilisateur de chiffrer les communications en utilisant la clé publique du serveur.

Fonctionnement en mode dégradé ou déconnecté.

Chaque utilisateur historique du système, c'est-à-dire avant le basculement d'un réseau de périphérie en mode dégradé, possède un certificat émis par l'ACC 24 l'instance centrale 20 de l'IGC.

Par ailleurs, chaque serveur possède la clé publique K_ACC de l'ACC 24 lui permettant de vérifier l'authenticité d'un certificat émis par cette AC. Chaque serveur a reçu cette clé publique alors que le système fonctionnait normalement.

Suite à la survenue d'une rupture de la communication avec l'instance centrale 20 de l'IGC, le réseau de périphérie, dans notre exemple le réseau de périphérie 16, bascule dans le mode dégradé.

Un utilisateur historique du réseau de périphérie est alors élu administrateur, par exemple l'utilisateur U3 devient administrateur Admin du réseau de périphérie 16.

Dans le présent mode de réalisation, l'utilisateur promu administrateur a la permission d'interroger l'autorité de certification locale ACL afin que soit créés et signés par cette dernière des certificats pour des utilisateurs temporaires.

L'utilisateur/administrateur U3 possède un identifiant, ID_U3, et une paire de clés K_U3 et k_U3.

En tant qu'utilisateur historique, l'utilisateur/administrateur U3 possède également un certificat Certif_U3 émis par l'ACC 24 de l'instance centrale 20.

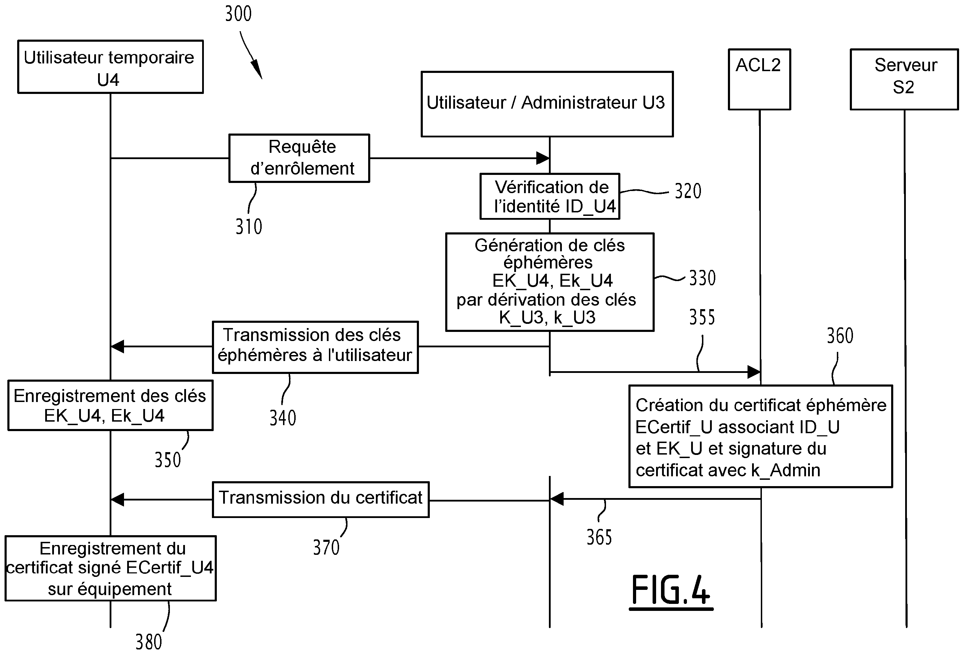

La Figure 4 illustre les étapes d'un procédé 300 de certification d'un utilisateur temporaire, par exemple l'utilisateur U4, par un utilisateur/administrateur du réseau de périphérie fonctionnant en mode dégradé, par exemple l'utilisateur U3.

Dans une étape 310, l'utilisateur temporaire émet, depuis l'équipement qu'il utilise, une requête d'enrôlement vers l'équipement de l'utilisateur/administrateur U3, en indiquant un identifiant, ID_U4. Plus précisément, l'utilisateur U4 adresse la requête d'enrôlement au réseau de périphérie 16. Sur ce réseau se trouve un annuaire électronique, par exemple du type LDAP, qui contient la liste des certificats des utilisateurs autorisés à accéder au réseau de périphérie 16, associés aux permissions de ces utilisateurs. Ces permissions indiquent notamment les utilisateurs historiques du réseau de périphérie dits « administrateur », qui ont des droits plus élevés que les utilisateurs historiques courants, en particulier le droit d'enrôler de nouveaux utilisateurs en mode dégradé et de pouvoir ainsi générer de nouveaux certificats à la volée en utilisant l'autorité de certification locale située sur ce réseau de périphérie. Sur la base des informations de l'annuaire électronique, la requête d'enrôlement est routée vers l'utilisateur/administrateur U3.

Dans une étape 320, l'utilisateur/administrateur U3 vérifie l'identité de l'utilisateur U4. Ceci se fait par exemple de visu, l'utilisateur/administrateur U3 reconnaissant l'utilisateur U4, ou par vérification d'un badge d'identification présenté par l'utilisateur U4 à l'utilisateur/administrateur U3. Il est à noter qu'un réseau de périphérie, en particulier mobile, comme une bulle tactique, est de taille réduite, de sorte que les utilisateurs sont physiquement proches les uns des autres.

Une fois l'identité de l'utilisateur temporaire vérifiée, dans une étape 330, l'utilisateur/administrateur U3 génère une paire de clés éphémères, pour l'utilisateur U4 : une clé publique EK_U4 et une clé privée Ek_U4. Ces clés sont générées par dérivation des clés publiques K_U3, k_U3 de l'utilisateur/administrateur U3.

Dans une étape 340, l'utilisateur/administrateur U3 répond à la requête d'enrôlement en transmettant à l'utilisateur les clés éphémères EK_U4 et Ek_U4 calculées.

Dans une étape 350, les clés éphémères EK_U4 et Ek_U4 sont enregistrées sur l'équipement utilisé par l'utilisateur U4.

Parallèlement, dans une étape 355, l'utilisateur/administrateur U3 émet une requête vers l'ACL2 en indiquant l'identifiant de l'utilisateur U4 et les clés éphémères EK_U4 et Ek_U4 générées pour cet utilisateur.

Dans l'étape 360, l'ACL2 accepte la requête de l'utilisateur/administrateur U3 qui possède les droits de demander à l'autorité de certification locale ACL2 de générer des certificats pour les utilisateurs temporaires que cet utilisateur/administrateur a admis sur le réseau de périphérie.

L'ACL2 crée alors un certificat éphémère ECertif_U4 pour l'utilisateur temporaire U4. Ce certificat éphémère associe l'identifiant de l'utilisateur ID_U4, la clé publique éphémère EK_U4 et la signature du certificat apposée par l'ACL2 en utilisant sa clé privée, k_ACL2.

Dans une étape 365, l'ACL2 transmet à l'utilisateur/administrateur U3 le certificat éphémère ECertif_U4 créé.

Dans une étape 370, l'utilisateur/administrateur U3 retransmet à l'utilisateur U4 le certificat éphémère ECertif_U4. L'utilisateur/administrateur U3 met également à jour l'annuaire LDAP avec des informations de validité / révocation du certificat de l'utilisateur U4.

Dans une étape 380, le certificat éphémère ECertif_U4 reçu est enregistré sur l'équipement utilisé par l'utilisateur U4.

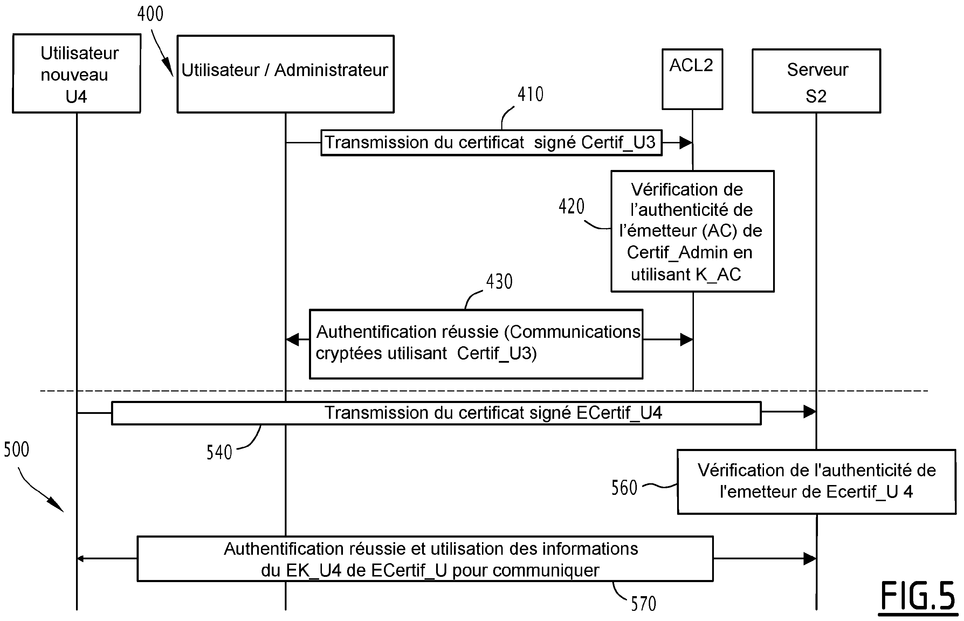

La Figure 5 illustre, dans sa partie haute, les étapes d'un procédé 400 d'authentification de l'utilisateur/administrateur U3 auprès de l'autorité de certification locale, ACL2 (ou, plus exactement, auprès du serveur de bordure offrant le service de certification locale, c'est-à-dire le serveur du réseau de périphérie sur lequel est exécuté l'ACL2). Cela permettra ensuite à l'utilisateur/administrateur U3 d'être en mesure de demander la certification d'utilisateurs temporaires, à cette autorité de certification locale.

Dans une étape 410, l'utilisateur/administrateur U3 transmet son certificat Certif_U3 au serveur.

Dans une étape 420, l'autorité de certification locale, ACL2, vérifie l'authenticité de l'ACC 24 ayant émis le certificat Certif_U3 en utilisant la clé publique K_ACC de l'ACC 24, que l'autorité de certification locale, ACL2 possède.

Lorsque la vérification échoue, le certificat de l'utilisateur/administrateur n'est pas reconnu comme valide et les requêtes de la part de l'utilisateur/administrateur à l'autorité de certification locale ne seront pas traitées.

Lorsque la vérification réussie, l'utilisateur/administrateur U3 est reconnu comme ayant la permission d'envoyer des requêtes à l'autorité de certification locale. Les informations de son certificat sont avantageusement mémorisées pour utilisation ultérieure par l'autorité de certification locale, notamment la clé publique K_U3 du certificat Certif_U3.

Une utilisation ultérieure possible consiste par exemple, dans une étape 430, à ce que l'utilisateur/administrateur U3 se connecte à l'annuaire LDAP pour donner des droits d'accès à l'utilisateur temporaire U4, comme des droits d'accès à tout ou partie des services offerts par le ou les serveurs de bordure S2 du réseau de périphérie.

La Figure 5 illustre, dans sa partie basse, les étapes d'un procédé 500 d'authentification d'un utilisateur temporaire, comme l'utilisateur U4, disposant d'un certificat éphémère auprès d'un serveur offrant un service, comme le serveur S2, d'un réseau de périphérie en mode dégradé.

Lorsque l'utilisateur temporaire U4 cherche à accéder à un service offert par le serveur de bordure S2, alors, dans une étape 550, il se connecte au serveur S2 et lui transmet son certificat éphémère ECertif_U4, afin que le serveur S2 puisse l'authentifier.

Dans une étape 560, le serveur S2 vérifie l'authenticité du certificat éphémère ECertif_U4, en vérifiant l'autorité de certification locale qui l'a signé et avantageusement le parent qui a généré la clé publique EK_U4 à partir de sa propre clé, à savoir l'utilisateur/administrateur. Le serveur S2 peut éventuellement consulter les informations de validité/révocation contenues dans l'annuaire LDAP.

Pour ce faire, le serveur S2 utilise la clé publique de l'autorité de certification locale ACL2 ayant émis le certificat ECertif_U4, en l'occurrence la clé publique K_ACL2 de l'ACL2.

De plus, avantageusement, le serveur S2 utilise la clé publique K_U3 de l'utilisateur/administrateur U3 pour vérifier la dérivation de clés, c'est-à-dire qu'il y a bien cohérence entre la clé publique parent (celle de U3) et clé publique enfant (celle de U4).

Le serveur S2 connaît la clé publique K_U3 par exemple en interrogeant l'annuaire local LDAP.

Lorsque l'authentification échoue, le serveur rejette la demande de connexion de l'utilisateur temporaire.

Lorsque l'authentification réussit, dans une étape 570, le serveur utilise les informations contenues dans le certificat éphémère ECertif_U4 (notamment la clé publique EK_U4) pour crypter les communications avec l'utilisateur temporaire (le serveur indiquant à cet utilisateur sa clé publique de manière à lui permettre de crypter les communications).

En variante, le serveur S2 peut, après avoir vérifié l'authenticité de l'émetteur du certificat (étape 560), interroger l'annuaire LDAP pour savoir si le certificat éphémère ECertif_U4 est valide et/ou est non-révoqué (étape similaire aux étapes 230-240-250).

On notera que c'est bien la clé K_U3 qui est utilisée pour l'authentification de l'utilisateur/administrateur U3 auprès de l'ACL2 et la clé K_ACL2 pour l'authentification de l'utilisateur temporaire U4 auprès du serveur S2.

Pour la mise en oeuvre de l'étape 330 de génération de clés éphémères par l'équipement de l'utilisateur/administrateur, ce dernier exécute un module de dérivation de clé 61.

En cryptographie, une fonction de dérivation de clé est une fonction qui permet de dériver une ou plusieurs clés en utilisant une fonction pseudo-aléatoire. La fonction de dérivation de clé peut être utilisée pour renforcer des clés en les étirant ou pour obtenir des clés d'un certain format.

En particulier, les algorithmes de dérivation de clés enfant - CKD (en anglais « Child Key Dérivation ») permettent, à partir de la clé d'un parent et d'un indice i, de calculer une clé enfant. Par exemple, l'algorithme « BIP32 » est utilisé.

Deux opérations de dérivation de clé sont réalisées par le module de dérivation de clé 61 : la première permet de dériver la clé publique enfant (i.e. la clé publique éphémère EK_U4) à partir de la clé publique parent (i.e. la clé publique K_U3) ; et la seconde permet de dériver la clé privée enfant (i.e. la clé privée éphémère Ek_U4) à partir de la clé privée parent (i.e. la clé privée k_U3).

Deux types de clés enfant peuvent être dérivées :
- une clé enfant « renforcée » (« hardened »), en utilisant un indice *i* > 2³¹, auquel cas on ne peut pas prouver qu'une clé enfant est liée à une clé parent ;
- une clé enfant normale ou non- renforcée (« non-hardened »), en utilisant un indice *i* ≤ 2³¹, auquel cas on peut prouver qu'une clé enfant est liée à une clé parent, en utilisant seulement ces deux clés.

Dans la variante avantageuse de l'invention, le module de dérivation de clé 61 permet de dériver des clés enfant non-renforcées de sorte qu'il soit possible pour un serveur, pour des raisons de traçabilité, de retrouver l'utilisateur/administrateur qui a généré la paire de clés éphémères pour l'utilisateur temporaire, c'est-à-dire qui a identifié cet utilisateur temporaire comme un utilisateur légitime du système 10 et lui a permis de s'enrôler sur le réseau de périphérie.

Au-delà de la certification des clés éphémères par l'ACL, l'utilisateur/administrateur délivre le certificat créé, et révoque et/ou met à jour les certificats éphémères en services. On retrouve les fonctions similaires à celles de l'instance centrale de l'IGC.

La révocation possible d'un certificat enfant n'interfère pas sur la validité du certificat parent.

Lorsque l'utilisateur temporaire U4 ayant été enregistré par l'utilisateur/administrateur U3 du réseau de périphérie 16 en mode dégradé sur l'AC locale, ACL2, de ce réseau de périphérie, se déplace vers un autre réseau de périphérie, qui lui fonctionne en mode connecté, par exemple le réseau 18, l'authentification de l'utilisateur U4 est faite de la manière suivante.

Dans un premier temps , le serveur S4 auquel cherche à se connecter l'utilisateur U4 vérifie la validité du certificat de l'utilisateur ECertif_U4.

Pour cela, le serveur S4 dérive tout d'abord la clé publique parent K_U3 de l'utilisateur/administrateur qui a généré la clé publique enfant EK_U4 de l'utilisateur U4. Ceci est possible lorsqu'il s'agit d'une clé enfant non-renforcée.

Ensuite, le serveur S4 vérifie que le certificat ECertif_U4 de l'utilisateur U4 a bien été signé par l'AC locale du réseau de périphérie sur lequel U3 est un utilisateur/administrateur. Le serveur S4 utilise pour cela la clé publique de l'AC locale K_ACL2. Cette dernière est connues puisque échangée régulièrement au sein du système 10.

De plus, le serveur S4 interroge l'instance centrale de l'IGC 20 pour savoir si le certificat Certif_U3 de l'utilisateur/administrateur U3 est bien valide et n'a pas été révoqué.

Si toutes ces informations sont correctes, alors le certificat temporaire ECertif_U4 de l'utilisateur U4 est révoqué et ce dernier doit enclencher la procédure classique pour obtenir un certificat de la part de l'instance centrale de l'IGC, comme c'est normalement le cas en mode connecté.

Lorsque l'utilisateur temporaire U4 ayant été enregistré par l'utilisateur/administrateur U3 du réseau de périphérie 16 en mode dégradé sur l'AC locale, ACL2, de ce réseau de périphérie, se déplace vers un autre réseau de périphérie qui fonctionne cette fois-ci en mode déconnecté, par exemple le réseau 18, l'authentification de l'utilisateur U4 est faite de la manière suivante.

Si les deux réseaux de périphérie 16 et 18 peuvent communiquer entre eux, un partage de contexte de sécurité est réalisé lors de la fédération de ces deux réseaux de périphérie.

Au cours de ce partage de contexte, sont notamment partagées les clés publiques des autorités de certification locales des deux réseaux de périphérie (pour la validation des certificats éphémères) et avantageusement les clés publiques des utilisateurs/administrateurs de chaque réseau de périphérie (pour vérifier le lien parent / enfant de la génération de clés éphémères).

Au cours de ce partage de contexte, il également préférable de mettre à jour les droits des utilisateurs temporaires dans les annuaires LDAP des deux réseaux de périphérie et les listes des deux réseaux de périphérie relatives à la validité/révocation des certificats des utilisateurs temporaires.

Ainsi, lorsque l'utilisateur temporaire U4 se connecte au réseau périphérique 18, il y a vérification de la validité du certificat de l'utilisateur temporaire U4 par l'instance locale de l'IGC du réseau de périphérie 18, ACL3, en utilisant la clé publique K_ACL2 de l'AC locale ACL2 du réseau de périphérie 16 (et avantageusement la relation parent/enfant des clés éphémères), mais aussi vérification des droits de cet utilisateur temporaire aux services offerts par le réseau de périphérie 18.

Ainsi, le réseau de périphérie 18, qui ne connait pas l'utilisateur temporaire U4 accepté par le réseau de périphérie 16, peut accepter cet utilisateur temporaire U4 en vérifiant la validité de son certificat éphémère (délivré par le réseau de périphérie 16).

Lorsqu'un utilisateur historique, c'est-à-dire déjà enregistré par l'instance centrale 20 de l'IGC, se déplace vers un réseau de périphérie en mode dégradé, l'authentification est faite de la manière suivante.

C'est par exemple le cas de l'utilisateur U1, qui cherche à accéder à une ressource sur le serveur S2 du réseau de périphérie 16 fonctionnant en mode dégradé.

Tous les réseaux de périphérie ont connaissance de la clé publique K_ACC de l'AC centrale 24. Celle-ci a été poussée durant le mode connecté. Ainsi, en mode déconnecté, le réseau de périphérie 16 peut vérifier la validité du certificat Certif_U1 de l'utilisateur historique U1, dans la mesure où ce certificat a été signé par l'ACC 24.

De plus, en mode connecté, des copies de la seconde liste indiquant les certificats révoqués sont créées à chaque changement de cette liste et poussées vers les instances locales de l'IGC présentes dans chaque réseau de périphérie. En variante, elles sont stockées dans l'annuaire LDAP.

En revanche, si le certificat de l'utilisateur historique U4 est révoqué alors que le réseau de périphérie 16 fonctionne déjà en mode déconnecté, ce réseau de périphérie ne pourra pas le savoir, ne pouvant pas recevoir de copie mise à jour de la liste CRL tenue à jour par l'instance centrale de l'IGC.

Il est à noter que certains utilisateurs ont les privilèges requis pour accéder aux données stockées dans l'annuaire LDAP et effectuer les opérations nécessaire comme la mise à jour des droits d'un autre utilisateur ou la synchronisation des listes de certificats valides/révoqués. Ces utilisateurs peuvent être l'utilisateur/administrateur responsable de la génération de clés éphémère ou un autre utilisateur du réseau de périphérie. Ces utilisateurs sont connus à l'avance et son identités (par exemple au moyen d'un certificat adapté) et ses privilèges sont enregistrés dans l'annuaire LDAP.

Dans ce premier mode de réalisation, la mobilité est permise. En effet, le certificat est émis par l'AC locale du réseau local d'origine auquel l'utilisateur temporaire se connecte. Son certificat va contenir la clé publique de l'AC locale du réseau local d'origine et la clé publique de l'utilisateur administrateur du réseau local d'origine qui a effectué une dérivation de clés à partir de sa paire de clés publique/privée pour l'utilisateur temporaire. Par défaut, le certificat est valable seulement dans le réseau local d'origine dans lequel il a été généré. Mais, grâce à la dérivation de clés du parent (c'est-à-dire de l'utilisateur administrateur) vers l'enfant (c'est-à-dire utilisateur temporaire), l'autorité de certification d'une autre bulle peut vérifier le certificat de l'utilisateur temporaire, car il peut vérifier : la clé publique de l'AC locale du réseau local d'origine ; la clé publique de l'utilisateur administrateur du réseau local d'origine (celle-ci étant signée par l'AC locale du réseau d'origine ou de préférence par l'AC centrale) ; et la clé publique de l'utilisateur temporaire (puisque sa paire de clés a été dérivée de celle de l'utilisateur administrateur).

Cela nécessite cependant un partage de contexte préalable, au cours duquel l'AC centrale pousse régulièrement (en mode connecté) à tous les réseaux périphériques, la liste des clés publiques qu'il a signées, AC locales et/ou utilisateurs administrateurs locaux.

### VARIANTE

Dans le mode de réalisation principal décrit précédemment, l'utilisateur/ administrateur a les droits pour utiliser l'autorité de certification locale, qui fait partie de la chaine de confiance.

Pour éviter d'exposer une telle autorité de certification locale dans le réseau de périphérie (notamment sa clé privée), une variante de réalisation va maintenant être présentée.

Alors que le réseau de périphérie 16 fonctionne en mode connecté, un utilisateur/administrateur génère un groupe de paires de clés éphémères, chaque paire de clés éphémères comportant une clé publique éphémère et une clé privée éphémère.

Ce groupe de paires de clés éphémères est stocké dans un coffre-fort sur le réseau de périphérie 16. Ce coffre-fort est par exemple une base de données sécurisée.

Puis, l'utilisateur/administrateur interroge l'instance centrale de l'IGC pour obtenir un certificat pour chaque paire de clés éphémères de ce groupe.

L'ACC 24 génère ainsi un certificat comportant la clé publique éphémère (à partir de laquelle on peut retracer l'identité de l'utilisateur/administrateur, lorsqu'il est possible de remonter à sa clé publique), l'identifiant ID_ACC de l'AC centrale 24 et une signature calculée en utilisant la clé privée k_ACC de l'AC centrale. Le certificat peut avantageusement détenir une période de validité que l'utilisateur/administrateur définit.

Le certificat ainsi généré est retransmis à l'utilisateur/administrateur qui le stocke dans le coffre-fort avec la paire de clés éphémères correspondante.

En cas de fonctionnement en mode dégradé, lorsqu'un utilisateur temporaire cherche à accéder au réseau 16, après vérification de son identité, l'utilisateur/ administrateur sélectionne, dans le coffre-fort, une paire de clés éphémères et le certificat correspondant. Il transmet ces informations à l'utilisateur temporaire. Ce dernier peut alors utiliser ces informations pour accéder aux services du ou des serveurs du réseau de périphérie.

Dans cette variante, il n'y a plus d'autorité de certification locale sur le réseau de périphérie. La clé privée qui signe les certificats pour les utilisateurs temporaires n'est pas celle de l'AC locale mais celle de l'AC centrale. Les clés de certification ne sont donc pas exposées en cas de compromission du réseau de périphérie.

De plus, cette variante permet également la mobilité entre réseaux de périphérie d'un utilisateur temporaire. Un utilisateur temporaire peut passer du réseau de périphérie sur lequel il a été enrôlé, vers un autre réseau de périphérie, même lorsque ces deux réseaux de périphérie sont en mode déconnecté et qu'ils ne peuvent pas communiquer entre eux (pour effectuer un partage de contexte de sécurité). En effet, le réseau de périphérie d'accueil peut vérifier le certificat de l'utilisateur temporaire, puisque ce certificat a été généré à l'avance par l'utilisateur administrateur et signé par l'AC centrale, connue du réseau d'accueil. Ces certificats sont valides par défaut dans toutes les bulles et acceptés par leurs autorités de certification locales.

Si l'on veut mettre en oeuvre la possibilité de retrouver l'utilisateur/administrateur qui a généré la paire de clés de l'utilisateur temporaire, il est nécessaire de partager les annuaires LDAP entre réseau de périphérie alors qu'ils fonctionnent en mode connecté, pour que le réseau d'accueil connaisse les utilisateurs/administrateurs du réseau d'enrôlement, avant que ces deux réseaux de périphérie ne basculent en mode déconnecté et alors qu'ils ne peuvent pas communiquer entre eux (pour effectuer un partage de contexte de sécurité).

## Revendications

1. Système informatique de périphérie à accès multiple (10) comportant un réseau coeur (12) et des premier et second réseaux de périphérie (16), le système comportant :
- une infrastructure de gestion de clés (20), comportant une instance centrale hébergé sur le réseau coeur et comportant une autorité de certification centrale (24), et une instance locale hébergée sur le premier réseau de périphérie et comportant une première autorité de certification locale (ACL2), la première autorité de certification locale étant signée par l'autorité de certification centrale, de manière à garantir une chaine de confiance dans la hiérarchie des autorités de certification ;
- un utilisateur/administrateur (U3) connecté au premier réseau de périphérie, mémorisant une paire de clés administrateur, la paire de clés administrateur comportant une clé publique (K_U3) et une clé privée (k_U3), ainsi qu'un certificat administrateur (Certif_U3), signé par l'autorité de certification centrale, ledit utilisateur/administrateur ayant des droits lui permettant d'être promu administrateur du premier réseau de périphérie pour réaliser des fonctions d'autorité d'enregistrement local et d'autorité de validation locale, lors d'un basculement du premier réseau de périphérie dans un mode dégradé suite à une perte de communication avec l'instance centrale de l'infrastructure de gestion de clés ;
- un serveur (S2), hébergé sur le premier ou le second réseau de périphérie (16), le serveur mémorisant une clé publique (K_ACL2) d'une autorité de certification appartenant à la chaine de confiance à laquelle appartient la première autorité de certification locale,
l'utilisateur/administrateur étant adapté, en mode dégradé du premier réseau de périphérie à enrôler un utilisateur temporaire (U4) en générant (330) une paire de clés éphémères, ladite paire de clés éphémères comportant une clé publique éphémère (EK_U4) et une clé privée éphémère (Ek_U4), et à transmettre à l'autorité de certification locale (340, 370) une requête de certification de ladite paire de clés éphémères, l'autorité de certification locale étant propre à émettre un certificat éphémère (ECertif_U4) associé à ladite paire de clés éphémères en réponse à la requête de certification de l'utilisateur/administrateur (U3),
l'utilisateur/administrateur étant adapté à transmettre la paire de clés éphémères et le certificat éphémère à l'utilisateur temporaire (U4), l'utilisateur/administrateur étant alors capable de se connecter au premier ou au second réseau de périphérie afin d'accéder à un service hébergé sur le serveur (S2).

2. Système informatique de périphérie à accès multiple (10) comportant un réseau coeur (12) et des premier et second réseaux de périphérie (16), le système comportant :
- une infrastructure de gestion de clés (20), comportant uniquement une instance centrale hébergée sur le réseau coeur et comportant une autorité de certification centrale (24) ;
- un utilisateur/administrateur (U3), connecté au premier réseau de périphérie, mémorisant une paire de clés administrateur, la paire de clés administrateur comportant une clé publique (K_U3) et une clé privée (k_U3), ainsi qu'un certificat administrateur (Certif_U3), signé par l'autorité de certification centrale, ledit utilisateur/administrateur ayant des droits lui permettant d'être promu administrateur du premier réseau de périphérie lors d'un basculement du premier réseau de périphérie dans un mode dégradé suite à une perte de communication avec l'instance centrale de l'infrastructure de gestion de clés ;
- un serveur (S2), hébergé sur le premier ou le second réseau de périphérie (16), mémorisant une clé publique (K_ACC) de l'autorité de certification centrale, l'utilisateur/administrateur étant adapté, en mode connecté du premier réseau de périphérie, à générer une pluralité de paires de clés éphémères, chaque paire de clés éphémères comportant une clé publique éphémère (EK_U4) et une clé privée éphémère (Ek_U4), et à transmettre à l'autorité de certification centrale une requête de certification de chaque paire de clés éphémères afin d'obtenir un certificat éphémère pour chaque paire de clés éphémères,
l'utilisateur/administrateur étant adapté, en mode dégradé du premier réseau de périphérie, à enrôler un utilisateur temporaire (U4) en lui transmettant une paire de clés éphémères et le certificat éphémère correspondant, l'utilisateur/administrateur étant alors capable de se connecter au premier ou au second réseau de périphérie afin d'accéder à un service hébergé sur le serveur (S2).

3. Système selon la revendication 1 ou la revendication 2, dans lequel l'utilisateur/administrateur (U3) comporte un module de génération de clés (61) permettant de dériver la paire de clés éphémères à partir de la paire de clés administrateur.

4. Système selon la revendication 3, dans lequel le module de génération de clés (61) met en oeuvre un algorithme de dérivation de clé non-renforcée, afin de pouvoir relier une clé publique enfant à la clé publique parent dont elle est issue, et ainsi retrouver l'utilisateur/administrateur l'ayant générée.

5. Système selon l'une quelconque des revendications 1 à 4, dans lequel le certificat éphémère comporte la clé publique éphémère (EK_U4) et une signature calculée en utilisant la clé privée (k_ACL2) de l'autorité de certification locale (ACL2) ou la clé privée (k_ACC) de l'autorité de certification centrale.

6. Procédé d'enrôlement d'un utilisateur temporaire mis en oeuvre dans un système informatique de périphérie à accès multiple (10) comportant un réseau coeur (12) et des premier et second réseaux de périphérie (16), le système (10) étant conforme à la revendication 1, **caractérisé en ce qu'**il comporte, alors que le premier réseau de périphérie (16) fonctionne en mode dégradé, les étapes de :
- émission (310) par l'utilisateur temporaire (U4) d'une requête d'enrôlement vers un utilisateur/administrateur (U3) du réseau de périphérie ;
- identificaiton de l'utilisateur temporaire par l'utilisateur/administrateur ;
- génération par un utilisateur/administrateur (U3) du premier réseau de périphérie d'au moins une paire de clés éphémères et certification de ladite paire de clés éphémères par une autorité de certification locale du premier réseau de périphérie, l'autorité de certification locale étant signée par une autorité de certification centrale, de manière à obtenir un certificat éphémère associé à la paire de clés éphémères ; et,
- transmission (340, 370) par l'utilisateur/administrateur à l'utilisateur temporaire de la paire de clés éphémères et du certificat éphémère associé,
l'utilisateur/administrateur étant alors capable de se connecter au premier ou au second réseau de périphérie afin d'accéder à un service hébergé sur un serveur (S2) du premier ou du second réseau de périphérie (16) et mémorisant une clé publique (K_ACC) d'une autorité de certification d'une chaine de confiance à laquelle appartient la première autorité de certification locale.

7. Procédé d'enrôlement d'un utilisateur temporaire mis en oeuvre dans un système informatique de périphérie à accès multiple (10) comportant un réseau coeur (12) et des premier et second réseaux de périphérie (16), le système (10) étant (10) conforme à la revendication 2, **caractérisé en ce qu'**il comporte, alors que le premier réseau de périphérie (16) fonctionne en mode dégradé, les étapes de :
- génération à l'avance, alors que le premier réseau de périphérie fonctionne en mode connecté, par un utilisateur/administrateur (U3) du premier réseau de périphérie d'au moins une paire de clés éphémères et certification de ladite paire de clés éphémères par une autorité de certification centrale, de manière à obtenir un certificat éphémère associé à la paire de clés éphémères, l'utilisateur/administrateur stockant la paire de clés éphémères et le certificat correspondant dans un coffre-fort ;
- émission (310) par l'utilisateur temporaire (U4) d'une requête d'enrôlement vers l'utilisateur/administrateur (U3) du réseau de périphérie ; et,
- sélection dans le coffre-fort et transmission (340, 370) par l'utilisateur/administrateur à l'utilisateur temporaire de la paire de clés éphémères et du certificat éphémère associé, l'utilisateur/administrateur étant alors capable de se connecter au premier ou au second réseau de périphérie afin d'accéder à un service hébergé sur un serveur (S2) hébergé sur le premier ou le second réseau de périphérie (16) et mémorisant une clé publique (K_ACC) de l'autorité de certification centrale.

8. Procédé selon l'une quelconque des revendications 6 à 7, dans lequel l'utilisateur/administrateur (U3) est adapté pour dériver la paire de clés éphémères depuis la paire de clés de l'utilisateur/ administrateur en mettant en oeuvre un algorithme de dérivation de clé non-renforcée de manière à pouvoir tracer l'utilisateur/administrateur ayant participer à l'enrôlement d'un utilisateur temporaire.

9. Procédé selon l'une quelconque des revendications 6 à 8, comportant une étape de vérification (320) d'une identité de l'utilisateur temporaire par l'utilisateur/administrateur.
